# EUROPEAN PATENT SPECIFICATION

(11) **EP 2 411 261 B1**
(45) Date of publication and mention of the grant of the patent: **06.05.2015**
(21) Application number: 10715587.1
(22) Date of filing: 22.03.2010
(51) Int. Cl.: B62D 29/00

(54) **HYBRID STRUCTURAL PROFILE APPLICABLE TO AN AUTOMOTIVE VEHICLE**
AUF EIN KRAFTFAHRZEUG ANWENDBARES HYBRIDSTRUKTURPROFIL
PROFILÉ STRUCTURAL HYBRIDE UTILISABLE POUR UN VÉHICULE AUTOMOBILE

(30) Priority: 25.03.2009 ES 200900807
(43) Date of publication of application: 01.02.2012
(73) Proprietor: Barcelona Technical Center, SL, 08760 Martorell - Barcelona (ES)
(72) Inventor: RUIZ RINCÓN, Rafael, E-08760 Martorell (Barcelona) (ES)
(74) Representative: Torner Lasalle, Elisabet
(86) International application number: PCT/IB2010/000681
(87) International publication number: WO 2010/109315

(56) References cited:
- EP-A2- 1 084 816
- EP-A2- 1 163 992
- WO-A1-02/068257
- WO-A2-2007/109329
- DE-A1-102004 032 951

## Description

### Technical Field

The present invention relates to a hybrid structural profile applicable in the automotive industry, in the aeronautical industry and in other fields. The hybrid structural profile of the present invention comprises a base structure, which can be of metal material or of a composite material, and an overmolded plastic structure, including a technical solution for assuring the attachment of the plastic material to the base structure. A passenger compartment cross member, a bumper cross member, a lateral reinforcement element, a back door structure, a side door structure, a seat structure, etc., among others, in an automotive vehicle, can be mentioned as examples of application of the hybrid structural profile of the present invention.

### Background of the Invention

International patent application WO 02/068257 discloses a structure for a component of an automotive vehicle made up of a metal body made of sheet metal deep-drawn into a channel shape on which there is overmolded a plastic material which coats parts of the metal body and which defines a plurality of reinforcement ribs inside the concave part of the channel shape of the metal body. To carry out the attachment between the metal body and the overmolded plastic material, projecting securing elements, which are embedded in the overmolded plastic material, are formed or fixed in the sheet of the metal body. A drawback of this structure is that the metal body of sheet metal deep-drawn into a channel shape has relatively low compression and torsional strength in comparison, for example, with a closed cross-section profile metal tube having a comparable weight.

Document DE 102004032951 discloses the preamble of claim 1.

### Disclosure of the Invention

The present invention, as defined by claim 1, proposes a hybrid structural profile applicable, for example, to a component of an automotive vehicle, which comprises, as is known, a base structure having projecting securing elements, and an overmolded plastic structure on said base structure embedding said projecting securing elements. The hybrid structural profile of the present invention is characterized in that the mentioned base structure comprises at least one tubular body, elongated in the direction of a longitudinal axis and with a closed cross-section profile around said longitudinal axis, and in that the plastic structure comprises at least one plastic reinforcement body defining, on a first side of the tubular body, at least one structural wall extending outwardly from an outer surface of the tubular body and along at least one portion thereof. The dimensions of the structural wall are selected to provide together with the tubular body a cross-sectional area with a desired moment of inertia.

In a basic embodiment of the present invention, the structural profile includes a single structural wall on one side of the tubular body. In other embodiments, the hybrid structural profile comprises several structural walls extending from different sides of the tubular body. For example, two structural walls extending from adjacent sides of the tubular body, or two mutually aligned structural walls extending from opposite sides of the tubular body, or two mutually aligned structural walls extending from opposite sides of the tubular body and a third structural wall perpendicular to the first two extending from a third side of the tubular body between the two opposite structural walls, or four structural walls opposite two by two extending from four sides of the tubular body. Furthermore, each structural wall or at least one of the structural walls preferably has one or more flanges extending laterally therefrom and preferably from a distal edge thereof far from the tubular body, in a perpendicular or oblique direction with respect to the structural wall from which they extend. Optionally, when there are several structural walls, the plastic reinforcement body furthermore defines reinforcement ribs extending from one of the structural walls to the other, connecting them to one another. It is generally preferred that the mentioned reinforcement ribs are also connected with the flanges, if any, and in contact with the tubular body. Preferably, the structural walls defined by the plastic reinforcement body run parallel to or aligned with the longitudinal axis of the tubular body.

The tubular body can be formed, for example, by a piece of metal tube, which can be selected from a catalog of commercially available tubes or manufactured *ex professo* at a relatively low cost. Alternatively, the tubular body can be made of a composite material. The closed cross-section profile of the tube, either of metal or of composite material, can have any shape, although a circular cross-section profile is preferred due to its excellent behavior under compression and bending and due to its greater availability. For applications in the automotive field, a metal tube, for example of steel or a light alloy such as aluminium, or a tube of a composite material, such as a synthetic composite material comprising for example a matrix of a resin reinforced with glass fiber, carbon fiber, etc., can be used as a tubular body. For other applications, such as in the aeronautical field, tubes of composite materials will be preferred, although metal tubes of other more lightweight and resistant metals, such as titanium, are not discarded.

In one embodiment, the projecting and/or recessed securing elements are formed in one or more regions of the outer surface of the tubular body and comprise, for example, a knurling, grooving or indentation in contact with the plastic material of the plastic reinforcement body. In another embodiment, the projecting and/or recessed securing elements comprise stems fixed to the tubular body, for example, by welding or adhesive application, or by screwing in corresponding holes formed in the tubular body. These projecting and/or recessed securing elements can be of a metal material, such as steel, aluminium alloys, or titanium, among others, or of a plastic material. The material of the projecting and/or recessed securing elements will be selected in accordance with the material of tubular body 1.

In the event that the projecting and/or recessed securing elements are stems fixed to the tubular body, they can be externally smooth or be provided with surface reliefs in contact with the overmolded plastic material of the plastic reinforcement body. Said surface reliefs can be advantageously provided by an outer screw thread. The projecting and/or recessed securing elements will generally be of the same material as the tubular body or of a material compatible therewith in terms of fixing possibilities. When the surface reliefs of the stems are provided by an outer screw thread, the projecting and/or recessed securing elements can be commercially available screws, bolts or pieces of threaded rod, for example of steel, which can be fixed to the tubular body by welding, when the latter is of steel for example, or by screwing in threaded holes formed in the tubular body, or by adhesive application. If self-tapping screws, for example, are used, the holes of the tubular body can be smooth. The projecting and/or recessed securing elements can be distributed along the tubular body in strategically selected places to be embedded in the overmolded plastic material of the plastic reinforcement body. For example, the projecting and/or recessed securing elements can be aligned along the tubular body to be embedded in the bases of the structural walls of the plastic reinforcement body, preferably in the intersections between two or more reinforcement ribs and one of the structural walls, or distributed in another manner to be embedded in the bases of the reinforcement ribs, preferably in the intersections between two or more reinforcement ribs, or arranged according to a combination of the previous possibilities. Given that the structural walls and the reinforcement ribs of plastic material are relatively thin, in the regions of the plastic reinforcement body where the projecting and/or recessed securing elements are embedded, the plastic material of the structural walls or reinforcement ribs have thickened portions for the purpose of completely coating the projecting and/or recessed securing elements.

Alternatively or additionally, the base structure can comprise two or more of said tubular bodies arranged mutually parallel and spaced. In one embodiment, the base structure comprises two mutually parallel and spaced tubular bodies and the plastic reinforcement body defines a structural connection wall extending from the outer surface of one of the tubular bodies to the outer surface of the other one. The plastic reinforcement body preferably defines other structural walls extending from other sides of the outer surfaces of the tubular bodies, which will preferably be provided with flanges and connected by reinforcement ribs. In another embodiment, the base structure comprises two mutually parallel and spaced tubular bodies which are connected only by one or more connecting parts fixed by welding or adhesive application, and the plastic reinforcement body defines structural walls extending from the outer surfaces of the two tubular bodies, which will preferably be provided with flanges and connected by reinforcement ribs. In another embodiment a combination of the two previous embodiments is contemplated, i.e., a base structure formed by two or more mutually parallel and spaced tubular bodies, connected by connecting parts and by one or more structural connection walls defined by the plastic reinforcement body, which can also obviously define other structural walls, flanges and reinforcement ribs.

In any of the possible embodiments of the hybrid structural profile of the present invention, the plastic reinforcement body can additionally define functional elements, such as anchor configurations for fixing the hybrid structural profile to the body of a vehicle or to another structure, support elements for different components, etc. Thus, a component can be produced for an automotive vehicle from the hybrid structural profile of the present invention, such as a passenger compartment cross member, a bumper cross member, a lateral reinforcement element, a back door structure, a side door structure, a seat structure, and other components which will readily occur to one skilled in the art. The hybrid structural profile also has applications in other fields, including the aeronautics industry.

The hybrid structural profile of the present invention has several advantages in relation to the hybrid components of the prior art, including the following:
- The tubular body with a closed cross-section profile has excellent strength, especially against compressive and torsional stresses, in comparison with a body of deep-drawn sheet metal of comparable weight and size.
- The structural walls defined by the overmolded plastic reinforcement body, which extend outwardly from the tubular body, provide additional strength, especially against bending stresses.
- The tubular body and the projecting and/or recessed securing elements can be selected from commercially available materials and components or materials and components produced at a low cost in comparison with a body of deep-drawn sheet metal of comparable size and performance.

### Brief Description of the Drawings

The previous and other features and advantages will become more evident from the following detailed description of exemplary embodiments with reference to the attached drawings, in which:
Figure 1 is a perspective view of a hybrid structural profile according to an embodiment of the present invention, with an enlarged detail of a cut off part;
Figures 2A-2C are cross-section views of different alternative embodiments of the hybrid structural profile with a tubular body and a plastic reinforcement body defining a single structural wall;
Figures 3A-3D are cross-section views of different alternative embodiments of the hybrid structural profile with a tubular body and a plastic reinforcement body defining two structural walls;
Figures 4A-4D are cross-section views of other different alternative embodiments of the hybrid structural profile with a tubular body and a plastic reinforcement body defining two structural walls;
Figures 5A-5D are cross-section views of different alternative embodiments of the hybrid structural profile with a tubular body and a plastic reinforcement body defining three structural walls;
Figures 6A-6D are cross-section views of different alternative embodiments of the hybrid structural profile with a tubular body and a plastic reinforcement body defining four structural walls;

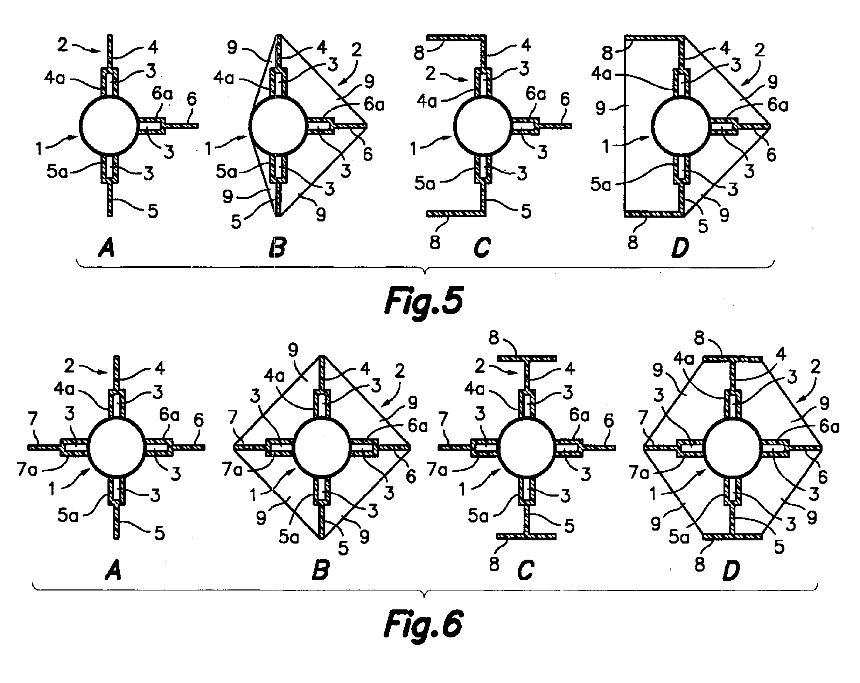

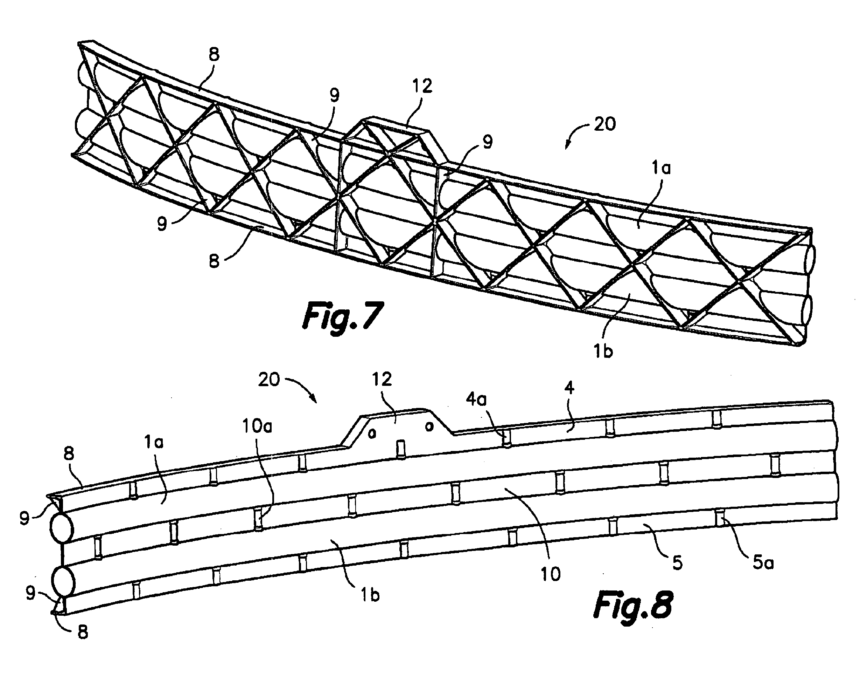

Figures 6 and 7 are perspective views of a bumper cross member for an automotive vehicle formed from a hybrid structural profile according to another embodiment of the present invention;

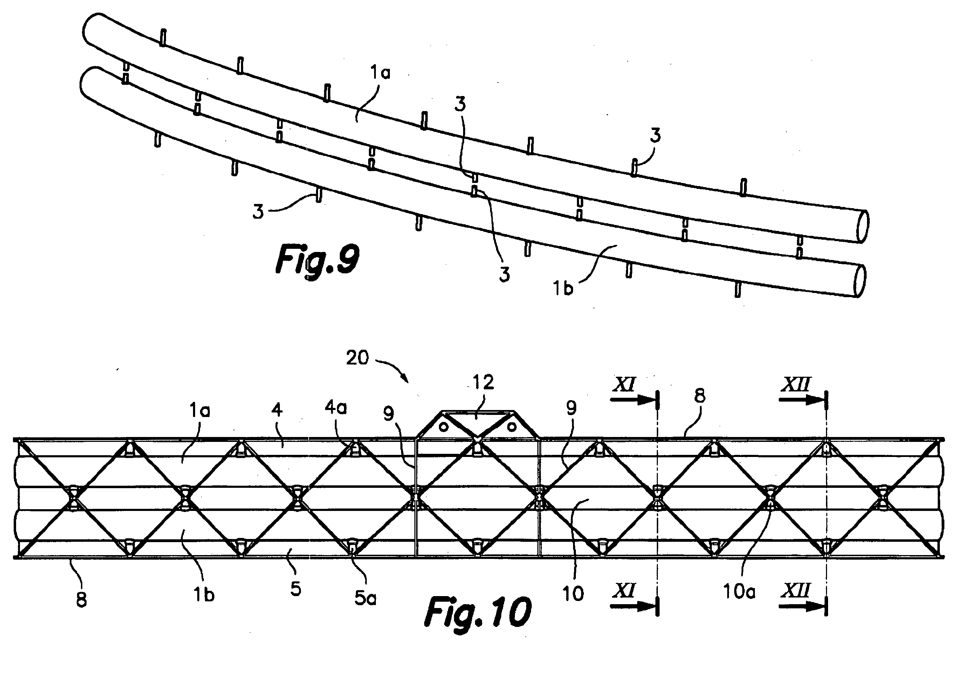

Figure 9 is a perspective view of a base structure formed by two tubular bodies and projecting and/or recessed securing elements fixed thereto, which form part of the bumper cross member of Figures 6 and 7;
Figure 10 is a front view of the bumper cross member of Figures 6 and 7;

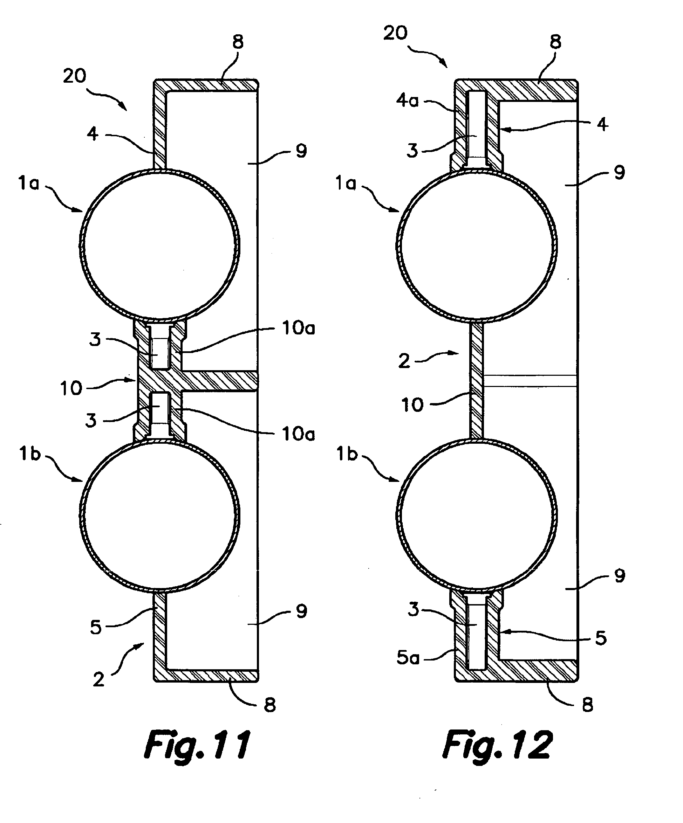

Figure 11 is a cross-section view taken along the XI-XI plane of Figure 10; and
Figure 12 is a cross-section view taken along the XII-XII plane of Figure 10.

### Detailed Description of Exemplary Embodiments

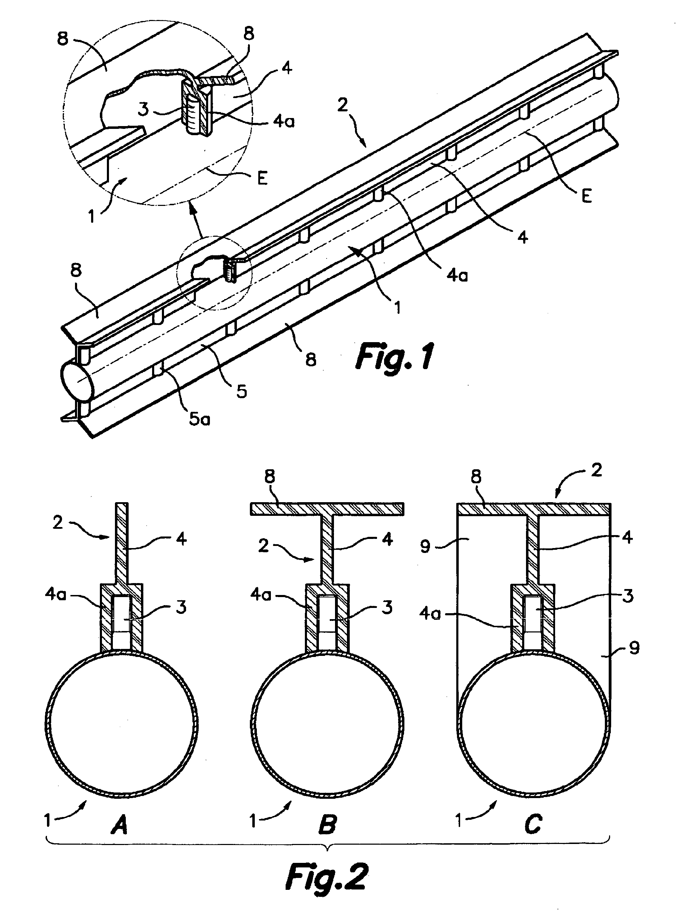

Figure 1 shows a hybrid structural profile according to an embodiment of the present invention, comprising a base structure in the form of a tubular body 1 and a plastic structure in the form of an overmolded plastic reinforcement body 2 on said base structure. The mentioned tubular body 1 is elongated in the direction of a longitudinal axis E and has a closed circular cross-section profile around said longitudinal axis E, although the closed cross-section profile of the tubular body 1 can alternatively have any shape other than circular. A plurality of projecting securing elements 3 (only one of which is seen in Figure 1 by means of a cut off part, best shown in the enlarged detail) are fixed to the tubular body 1, and said plastic reinforcement body 2 is overmolded on the base structure embedding said projecting securing elements 3. The plastic reinforcement body 2 defines, in opposite sides of the tubular body 1, a pair of structural walls 4, 5 extending outwardly from an outer surface of the tubular body 1 and therealong.

The tubular body 1 can be of a metal material, such as, for example, steel, an aluminium alloy, or titanium, among others, or of a composite material, such as, for example, a glass fiber or carbon fiber reinforced resin matrix, among others. In accordance with the material of tubular body 1, the projecting securing elements 3 can be of a metal material, such as steel, an aluminium alloy, or titanium, among others, or of a plastic material.

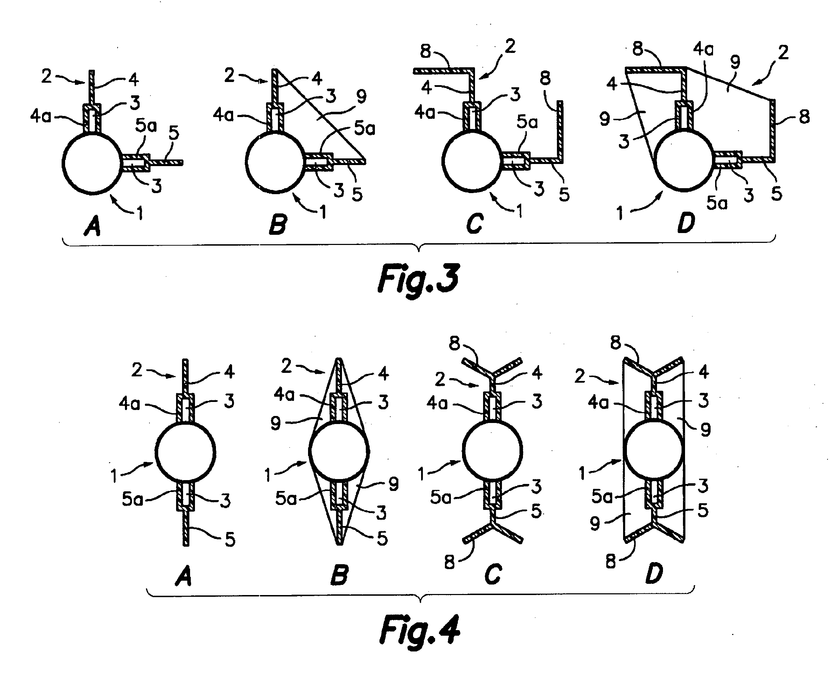

In the example of Figure 1, the tubular body 1 is straight and the structural walls 4, 5 are in a plane aligned with longitudinal axis E. The projecting securing elements 3 are threaded stems with an outer screw thread and are aligned along the tubular body 1 coinciding with the structural walls 4, 5, which are relatively thin and have thickened portions 4a, 5a of plastic material completely covering the projecting securing elements 3. The structural walls 4, 5 have respective distal edges distant from the tubular body 1, from which there extend flanges 8 that are oblique with respect to the structural walls 4, 5 from which they extend, such that each structural wall 4, 5 together with its respective flanges 8 has a Y-shaped cross-section profile. The hybrid structural profile of Figure 1 corresponds with the cross-section view shown in Figure 4C and described below.

The structural walls 4, 5 and the flanges 8 are sized to provide together with the tubular body 1 a cross-sectional area with a desired moment of inertia, in which the tubular body provides especially excellent strength against tensile, compressive and torsional stresses and the plastic reinforcement body 2 provides additional reinforcement against bending stresses produced especially by forces perpendicular to the longitudinal axis E and parallel to the structural walls 4, 5. Although in the example of Figure 1 the structural walls 4, 5 have a constant height along the tubular body 1, the height of the structural walls can optionally be variable along the tubular body 1 according to different stresses foreseen in different sections thereof.

As will be seen below, the hybrid structural profile can have structural walls arranged in different directions for providing reinforcement against bending stresses produced especially by forces perpendicular to the longitudinal axis E and in several directions. Theoretically there is no limit as to the directions in which the structural walls defined by the plastic reinforcement body 2 can extend. However, given that the plastic reinforcement body 2 is obtained by means of an overmolding operation in which a mold inside of which the base structure is arranged is used, when designing the hybrid structural profile the partition lines of the mold, the possibilities of having slides and the demolding directions will be taken into account to define the directions of the structural walls, flanges and reinforcement ribs, if there are any. Providing channels in the mold will also be taken into account to allow the distribution of the molten plastic material towards all the cavities of the mold defining the plastic reinforcement body 2, and these channels can result in strips of plastic material (not shown) generally in contact with an outer surface of the tubular body 1.

Several embodiments are now described in relation to Figures 2 to 6, which embodiments correspond to different basic arrangement examples for the structural walls in a hybrid structural profile according to the present invention. In all the embodiments of Figures 2 to 6, the base structure of the hybrid structural profile is provided with a single tubular body 1 with a circular cross-section profile with the mentioned projecting securing elements 3 fixed thereto, which are formed by stems provided with an outer screw thread in contact with the plastic material of the plastic reinforcement body 2. It will be understood that the only purpose of the mentioned outer screw thread is to improve adherence of the plastic material to the stem, and it could therefore be replaced by any other type of surface relief. In some cases in which the plastic reinforcement body 2 completely surrounds to the tubular body 1, like in the application example described below in relation to Figures 7-12, the stems could even be smooth, or the stems fixed to the tubular body 1 could be replaced by projecting and/or recessed securing elements (not shown) formed on a surface of the tubular body 1, for example by knurling, grooving or indenting.

In the embodiments of Figures 2A-2C, the plastic reinforcement body 2 defines a single structural wall 4 on a first side of the tubular body 1. Said structural wall 4 is aligned with the longitudinal axis of the tubular body 1 and with a row of projecting securing elements 3 fixed thereto. The base of the structural wall 4 has partially cylindrical thickened portions 4a completely covering the projecting securing elements 3. The plastic reinforcement body 2 of the embodiment of Figures 2A-2C contributes to creating, together with the tubular body 1, a cross-sectional area with a favorable moment of inertia against bending stresses caused by forces with a main component perpendicular to the longitudinal axis and parallel to the structural wall 4, which complements the excellent performance of the tubular body 1 against tensile, compressive and torsional stresses.

In the embodiments of Figures 3A-3D, the plastic reinforcement body 2 defines a pair of structural walls 4, 5 located in adjacent sides of the tubular body 1 and extending from an outer surface thereof. The two structural walls 4, 5 are mutually perpendicular and are aligned with the longitudinal axis of the tubular body 1 and with respective rows of projecting securing elements 3 fixed thereto. The bases of the structural walls 4, 5 have partially cylindrical thickened portions 4a, 5a completely covering the projecting securing elements 3. The plastic reinforcement body 2 of the embodiment of Figures 3A-3C contributes to creating, together with the tubular body 1, a cross-sectional area with a favorable moment of inertia against bending stresses caused by forces with a main component perpendicular to the longitudinal axis and parallel to either of the structural walls 4, 5, which complements the excellent performance of the tubular body 1 against tensile, compressive and torsional stresses.

In the embodiments of Figures 4A-4D, the plastic reinforcement body 2 also defines two structural walls 4, 5 extending from the outer surface of the tubular body 1, but in this case the structural walls 4, 5 are located on opposite sides of the tubular body 1 and are substantially coplanar and aligned with the longitudinal axis of the tubular body 1. Each of the two structural walls 4, 5 is furthermore aligned with a respective row of projecting securing elements 3 fixed to the tubular body 1. The bases of the structural walls 4, 5 have partially cylindrical thickened portions 4a, 5a completely covering the projecting securing elements 3. The plastic reinforcement body 2 of the embodiment of Figures 4A-4C contributes to creating, together with the tubular body 1, a cross-sectional area with a moment of inertia especially favorable against bending stresses caused by forces with a main component perpendicular to the longitudinal axis and parallel to the aligned structural walls 4, 5, which complements the excellent performance of the tubular body 1 against tensile, compressive and torsional stresses.

In the embodiments of Figures 5A-5D, the plastic reinforcement body 2 defines three structural walls 4, 5, 6. First and second structural walls 4, 5 of said structural walls extend from the outer surface of the tubular body 1 in first and second opposite sides thereof, and a third structural wall 6 extends from the outer surface of the tubular body 1 in a third side thereof located between the first and second sides. The first and second structural walls 4, 5 are substantially coplanar and are aligned with the longitudinal axis of the tubular body 1, whereas the third structural wall 6 is substantially perpendicular to the first and second structural walls 4, 5 and is also aligned with the longitudinal axis of the tubular body 1. Each of the three structural walls 4, 5, 6 is furthermore aligned with a respective row of projecting securing elements 3 fixed to the tubular body 1. The bases of the structural walls 4, 5, 6 have partially cylindrical thickened portions 4a, 5a, 6a completely covering the projecting securing elements 3. The plastic reinforcement body 2 of the embodiment of Figures 5A-5C contributes to creating, together with the tubular body 1, a cross-sectional area with a moment of inertia especially favorable against bending stresses caused by forces with a main component perpendicular to the longitudinal axis and parallel to the first and second aligned structural walls 4, 5, and favorable, to a lesser extent, against bending stresses caused by forces with a component parallel to the third structural wall 6, which complements the excellent performance of the tubular body 1 against tensile, compressive and torsional stresses.

In the embodiments of Figures 6A-6D, the plastic reinforcement body 2 defines four structural walls 4, 5, 6, 7. First and second structural walls 4, 5 of said structural walls extend from the outer surface of the tubular body 1 in first and second opposite sides thereof, and third and fourth structural walls 6, 7 extends from the outer surface of the tubular body I in third and fourth opposite sides thereof located between the first and second sides. The first and second structural walls 4, 5 are substantially coplanar and are aligned with the longitudinal axis of the tubular body 1, and the third and fourth structural walls 6, 7 are substantially coplanar and perpendicular to the first and second structural walls 4, 5, and are also aligned with the longitudinal axis of the tubular body 1. Each of the four structural walls 4, 5, 6, 7 is furthermore aligned with a respective row of projecting securing elements 3 fixed to the tubular body 1. The bases of the structural walls 4, 5, 6, 7 have partially cylindrical thickened portions 4a, 5a, 6a, 7a completely covering the projecting securing elements 3. The plastic reinforcement body 2 of the embodiment of Figures 6A-6C contributes to creating, together with the tubular body 1, a cross-sectional area with a moment of inertia especially favorable against bending stresses caused by forces with a main component perpendicular to the longitudinal axis and parallel to the first and second aligned structural walls 4, 5 or parallel to the third and fourth aligned structural walls 6, 7, which complements the excellent performance of the tubular body 1 against tensile, compressive and torsional stresses.

The embodiments of Figures 2A, 3A, 4A, 5A and 6A simply include the tubular body 1 with the projecting securing elements 3 fixed thereto and the plastic reinforcement body 2 defining only the structural wall or walls 4, 5, 6, 7 with the thickened portions 4a, 5a, 6a, 7a embedding the projecting securing elements 3.

The embodiments of Figures 3B, 4B, 5B and 6B are similar to those of the corresponding Figures 3A, 4A, 5A and 6A but furthermore including reinforcement ribs 9 connecting the structural walls 4, 5, 6, 7 to one another and with the outer surface of the tubular body 1. The mentioned reinforcement ribs 9 can be perpendicular to the structural walls 4, 5, 6, 7, although they are preferably arranged in several directions and intercrossed forming a lattice structure along the hybrid structural profile. The embodiment of Figure 2A could optionally also include reinforcement ribs (not shown) connecting the structural wall 4 with an outer surface of the tubular body 1 acting as buttresses thereof or forming a lattice structure.

The embodiments of Figures 2B, 3C, 4C, 5C and 6C are like those of the corresponding Figures 2A, 3A, 4A, 5A and 6A but with the addition of flanges 8 extending from respective distal edges of the structural walls 4, 5, 6, 7. Different examples for the configuration of flanges 8 are shown. For example, in Figures 2B and 6C, the flanges 8 extend from both sides of the respective structural wall 4, 5, 6, 7 in opposite directions perpendicular thereto, such that each structural wall 4, 5, 6, 7 together with its corresponding flanges 8 has a T-shaped cross-section profile. In Figures 3C and 5C, the flanges 8 extend toward a single side of the respective structural walls 4, 5 and in directions perpendicular thereto, such that each structural wall 4, 5 together with its corresponding flanges 8 has an L-shaped cross-section profile. It will be observed that in Figures 5C and 6C some of the structural walls 6, 7 have no flanges for aiding the demolding of the hybrid structural profile. In Figure 4C, flanges 8 extend toward both sides of the respective structural walls 4, 5 and in directions oblique thereto, such that each structural wall 4, 5 together with its respective flanges 8 has a Y-shaped cross-section profile. It will be observed that the embodiment shown in Figure 4C corresponds with that described in relation to Figure 1.

The embodiments of Figures 2C, 3D, 4D, 5D and 6D are similar to those of the corresponding Figure 2B, 3C, 4C, 5C and 6C but furthermore including reinforcement ribs 9 connecting one or both sides of each structural wall 4, 5, 6, 7 with the flanges 8 and with the outer surface of the tubular body 1. Said reinforcement ribs 9 preferably furthermore connect two structural walls 4, 5, 6, 7 to one another provided this is possible. The mentioned reinforcement ribs can be perpendicular to the structural walls 4, 5, 6, 7 and to the flanges 8 although they preferably are arranged in several directions and intercrossed forming a lattice structure along the hybrid structural profile.

It will be understood that the embodiments described above in relation to Figures 2-6 are simple examples from which a person skilled in the art will be able to carry out a number of combinations, additions, removals and modifications.

Now in relation to Figures 7-12, a bumper cross member 20 for an automotive vehicle built from a hybrid structural profile according to another embodiment of the present invention is described. The mentioned bumper cross member 20 comprises a base structure and an overmolded plastic material structure. The mentioned base structure (shown individually in Figure 9) comprises two of said tubular bodies 1a, 1b arranged with their longitudinal axes mutually parallel and separated at a predetermined distance. In the illustrated example, both tubular bodies 1a, 1b are identical, are slightly arched and have a circular cross-section profile, although they could alternatively be straight and/or different from one another. Each of the tubular bodies 1a, 1b has two rows of projecting securing elements 3 fixed thereto, for example by welding or adhesive application, or by screwing in corresponding holes formed in the tubular body 1. Each of said projecting securing elements 3 comprises a threaded stem with an outer screw thread, although alternatively the stems could have any other type of surface relief or could even be smooth. The stems forming the projecting securing elements 3 are arranged parallel to one another and perpendicular to the longitudinal axis of the corresponding tubular body 1a, 1b. The two tubular bodies 1a, 1b have opposite sides on which respective rows of projecting securing elements 3 are arranged and facing sides on which other respective rows of projecting securing elements 3 are arranged. The projecting securing elements 3 belonging to the rows in the facing sides are mutually aligned.

In the bumper cross member 20, the mentioned overmolded plastic material structure comprises a plastic reinforcement body 2 defining a structural connection wall 10 extending from the outer surface of one of the tubular bodies 1a, 1b to the outer surface of the other one, connecting the mentioned facing sides of the tubular bodies 1a, 1b. The mentioned structural connection wall 10 is relatively thin and is aligned with the longitudinal axes of the two tubular bodies 1a, 1b. Partially cylindrical thickened portions 10a of plastic material, completely covering the projecting securing elements 3 belonging to the rows arranged on the facing sides of the tubular bodies 1a, 1b are formed at opposite edges of the structural connection wall 10 in contact with the tubular bodies 1a, 1b.

First and second structural walls 4, 5 integral with the plastic reinforcement body 2 extend respectively from the opposite sides of the tubular bodies 1a, 1b. Said first and second structural walls 4, 5 are aligned with the longitudinal axes of the two tubular bodies 1a, 1b and with the structural connection wall 10. The first and second structural walls 4, 5 are relatively thin and have respective proximal edges in contact with the corresponding tubular bodies 1 a, 1b in which there are formed partially cylindrical thickened portions 4a, 5a of plastic material, completely covering the projecting securing elements 3 belonging to the rows arranged on the opposite sides of the tubular bodies 1a, 1b. The plastic reinforcement body 2 furthermore defines flanges 8 substantially perpendicular to the structural walls 4, 5 extending toward one side thereof from respective distal edges of the first and second structural walls 4, 5, and a plurality of reinforcement ribs 9 connecting the first and second structural walls 4, 5, the structural connection wall 7, the flanges 8 and the outer surfaces of the tubular bodies 1a, 1b. The mentioned reinforcement ribs 9 are substantially perpendicular to the first and second structural walls 4, 5 and to the structural connection wall 10 and oblique with respect to the flanges 8, and are arranged in different directions such that they intercross, forming a lattice structure along the bumper cross member 20.

As is best shown in Figure 10, to provide maximum robustness to the hybrid structural profile, the reinforcement ribs 9 have points of confluence with the flanges 8 coinciding with the thickened portions 4a, 5a of the first and second structural walls 4, 5, in which some of the projecting securing elements 3 are embedded, and points of mutual intersection coinciding with the thickened portions 10a of the structural connection wall 10, in which other projecting securing elements 3 are embedded.

Additionally, the plastic reinforcement body 2 defines a functional element in the form of an anchor configuration 12 projecting from the upper part of the bumper cross member 20. The mentioned anchor configuration 12 is reinforced with other additional reinforcement ribs 9, and serves to fix the bumper cross member 20 to the body of an automotive vehicle. Although in Figures 7-12 the bumper cross member 20 is shown with only one functional element, the versatility of the overmolded plastic material structure on the base structure allows the designer to incorporate other functional elements, such as additional anchor configurations, support elements for different components, etc.

As can be seen from Figure 9, the tubular bodies 1a, 1b forming the base structure are separated, such that in the bumper cross member 20 of the embodiment shown in Figures 7-12 the tubular bodies 1a, 1b are connected only by the plastic reinforcement body 2 forming the overmolded plastic material structure. Nevertheless, in an alternative embodiment not shown, the tubular bodies 1a, 1b are additionally connected by one or more connecting parts fixed thereto, for example, by welding or adhesive application, in which case the structural connection wall 10 of the plastic reinforcement body 2 can be completely or partially omitted.

A person skilled in the art will be able to make modifications and variations based on the embodiment shown and described without departing from the scope of the present invention as it is defined in the attached claims.

## Claims

1. A hybrid structural profile applicable to an automotive vehicle, said hybrid structural profile comprising a base structure having projecting securing elements (3) and an overmolded plastic structure on said base structure embedding said projecting securing elements (3),
whereby
the base structure comprises least one tubular body (1) elongated in the direction of a longitudinal axis (E) and with a closed cross-section profile around said longitudinal axis (E),
**characterized in that**:
said overmolded plastic structure defines, on a first side of the tubular body (1), at least one structural wall (4) extending from an outer surface of the tubular body (1) outwardly and along at least one portion thereof, said structural wall (4) being sized to provide together with the tubular body (1) a cross-sectional area with a desired moment of inertia; and
said projecting securing elements (3) comprise stems fixed to the tubular body and provided with an outer surface in contact with the plastic material of the overmolded plastic structure.

2. The hybrid structural profile according to claim 1, **characterized in that** said stems forming the projecting securing elements (3) are fixed to the tubular body (1) by welding or adhesive application, or by screwing in corresponding holes formed in the tubular body (1).

3. The hybrid structural profile according to claim 1 or 2, **characterized in that** said plastic overmolded structure defines, in a second side of the tubular body (1) opposite said first side, at least a second structural wall (5) extending from said outer surface of the tubular body (1) and along at least one portion thereof, said first and second structural walls (4, 5) being substantially coplanar or parallel.

4. The hybrid structural profile according to claim 1 or 2, **characterized in that** said plastic overmolded structure defines, in a second side of the tubular body (1) adjacent to said first side, at least a second structural wall (5) extending from said outer surface of the tubular body (1) and along at least one portion thereof, said first and second structural walls (4, 5) being substantially perpendicular.

5. The hybrid structural profile according to claim 3, **characterized in that** the plastic overmolded structure defines, in a third side of the tubular body (1) located between the first and second sides, a third structural wall (6) extending from the outer surface of the tubular body (1) and along at least one portion thereof, said third structural wall (6) being substantially perpendicular to the first and second structural walls (4, 5).

6. The hybrid structural profile according to claim 5, **characterized in that** the plastic overmolded structure defines, in a fourth side of the tubular body (1) opposite said third side, a fourth structural wall (7) extending from the outer surface of the tubular body (1) and along at least one portion thereof, said third and fourth structural walls (7) being substantially coplanar or parallel.

7. The hybrid structural profile according to one of claims 1 to 6, **characterized in that** the plastic overmolded structure defines at least one flange (8) extending from at least one of said first, second, third and fourth structural walls (4, 5, 6, 7), said flange (8) being perpendicular or oblique with respect to the respective first, second, third or fourth structural wall (4, 5, 6, 7) from which it extends.

8. The hybrid structural profile according to one of claims 1 to 7, **characterized in that** the plastic overmolded structure defines reinforcement ribs (9) connecting a side surface of at least one of said first, second, third and fourth structural walls (4, 5, 6, 7) with an outer surface of the tubular body (1) and/or with a side surface of at least another one of the first, second, third and fourth structural walls (4, 5, 6, 7).

9. The hybrid structural profile according to claim 8, **characterized in that** said reinforcement ribs (9) are furthermore connected with at least one of said flanges (8).

10. The hybrid structural profile according to claim 8 or 9, **characterized in that** said reinforcement ribs (9) are arranged in several directions and intercrossed forming a lattice structure along the hybrid structural profile.

11. The hybrid structural profile according to any one of the previous claims, **characterized in that** the base structure comprises at least two of said tubular bodies (1) arranged mutually parallel and spaced, and **in that** at least one of said structural walls defined by the plastic overmolded structure is a structural connection wall (10) extending from the outer surface of one of the tubular bodies (1) to the outer surface of the other one.

12. The hybrid structural profile according to claim 11, **characterized in that** said tubular bodies (1) are furthermore connected by at least one connecting part.

13. The hybrid structural profile according to any one of the previous claims, **characterized in that** said plastic overmolded structure furthermore defines at least one functional element.

14. The hybrid structural profile according to claim 1 or 3, **characterized in that** said stems forming the projecting securing elements (3) comprise surface reliefs in contact with the plastic material of the plastic overmolded structure.

15. The hybrid structural profile according to any one of the previous claims, **characterized in that** the material of the tubular body (1) is selected from a group comprising metal materials, which include steel, aluminium alloys, and titanium, among others, and composite materials, which include glass fiber reinforced resin matrices and carbon fiber reinforced resin matrices, among others, and **in that** the projecting securing elements (3) are of a material compatible with respect to the technique of attaching with the material of the tubular body (1) selected from a group comprising metal materials, which include steel, aluminium alloys, and titanium, among others, and plastic materials.

## Patentansprüche

1. Auf ein Kraftfahrzeug anwendbares Hybridstrukturprofil, wobei das genannte Hybridstrukturprofil eine Grundstruktur umfasst, aufweisend hervorstehende Haltelemente (3) und eine Kunststoffstruktur, welche über die genannte Grundstruktur überspritzt wird, wobei die genannten hervorstehenden Haltelemente (3) eingebettet werden,
wobei die Grundstruktur wenigstens einen rohrförmigen Körper (1) umfasst, welcher sich in der Richtung einer longitudinalen Achse (E) erstreckt und mit einem geschlossenen Querschnittsprofil um die genannte longitudinale Achse (E), **dadurch gekennzeichnet, dass**:
die genannte überspritzte Kunststoffstruktur, auf einer ersten Seite des rohrförmigen Körpers (1), wenigstens eine Strukturwand (4) definiert, welche sich von einer äußeren Oberfläche des rohrförmigen Körpers (1) aus nach außen und entlang wenigstens eines Teils desselben erstreckt, wobei die genannte Strukturwand (4) dimensioniert ist, um mit dem rohrförmigen Körper (1) eine Querschnittsfläche mit einem gewünschten Trägheitsmoment bereitzustellen; und
die genannten hervorstehenden Haltelemente (3) Zapfen umfassen, welche an dem rohrförmigen Körper befestigt sind und mit einer äußeren Oberfläche versehen sind, welche in Kontakt mit dem Kunststoffmaterial der überspritzten Kunststoffstruktur ist.

2. Hybridstrukturprofil nach Anspruch 1, **dadurch gekennzeichnet, dass** die genannten Zapfen, welche die hervorstehenden Haltelemente (3) bilden, an dem rohrförmigen Körper (1) durch Schweißen oder durch die Anwendung eines Klebemittels oder durch Verschraubung in entsprechenden, in dem rohrförmigen Körper (I) gebildeten Löchern befestigt werden.

3. Hybridstrukturprofil nach Anspruch 1 oder 2, **dadurch gekennzeichnet, dass** die genannte überspritzte Kunststoffstruktur, auf einer zweiten Seite des rohrförmigen Körpers (1), welche der genannten ersten Seite entgegengesetzt ist, wenigstens eine zweite Strukturwand (5) definiert, welche sich von der genannten äußeren Oberfläche des rohrförmigen Körpers (1) aus und entlang wenigstens eines Teils desselben erstreckt, wobei die genannte erste Strukturwand (4) und die genannte zweite Strukturwand (5) wesentlich koplanar oder parallel sind.

4. Hybridstrukturprofil nach Anspruch 1 oder 2, **dadurch gekennzeichnet, dass** die genannte überspritzte Kunststoffstruktur, auf einer zweiten Seite des rohrförmigen Körpers (1), welche an der genannten ersten Seite angrenzt, wenigstens eine zweite Strukturwand (5) definiert, welche sich von der genannten äußeren Oberfläche des rohrförmigen Körpers (1) aus und entlang wenigstens eines Teils desselben erstreckt, wobei die genannte erste Strukturwand (4) und die genannte zweite Strukturwand (5) wesentlich senkrecht sind.

5. Hybridstrukturprofil nach Anspruch 3, **dadurch gekennzeichnet, dass** die überspritzte Kunststoffstruktur, auf einer dritten Seite des rohrförmigen Körpers (1), welche sich zwischen der ersten und der zweiten Seite befindet, eine dritte Strukturwand (6) definiert, welche sich von der äußeren Oberfläche des rohrförmigen Körpers (1) aus und entlang wenigstens eines Teils desselben erstreckt, wobei die genannte dritte Strukturwand (6) zur ersten Strukturwand (4) und zur zweiten Strukturwand (5) wesentlich senkrecht ist.

6. Hybridstrukturprofil nach Anspruch 5, **dadurch gekennzeichnet, dass** die überspritzte Kunststoffstruktur, auf einer vierten Seite des rohrförmigen Körpers (1), welche der genannten dritten Seite entgegengesetzt ist, eine vierte Strukturwand (7) definiert, welche sich von der äußeren Oberfläche des rohrförmigen Körpers (1) aus und entlang wenigstens eines Teils desselben erstreckt, wobei die genannte dritte Strukturwand und die genannte vierte Strukturwand (7) wesentlich koplanar oder parallel sind.

7. Hybridstrukturprofil nach einem der Ansprüche 1 bis 6, **dadurch gekennzeichnet, dass** die überspritzte Kunststoffstruktur wenigstens einen Flansch (8) definiert, welcher sich von wenigstens einer der genannten ersten, zweiten, dritten und vierten Strukturwände (4, 5, 6, 7) aus erstreckt, wobei der genannte Flansch (8) senkrecht oder schräg in Bezug auf die jeweilige erste, zweite, dritte oder vierte Strukturwand (4, 5, 6, 7), von welcher aus er sich erstreckt, ist.

8. Hybridstrukturprofil nach einem der Ansprüche 1 bis 7, **dadurch gekennzeichnet, dass** die überspritzte Kunststoffstruktur Verstärkungsrippen (9) definiert, welche eine seitliche Oberfläche von wenigstens einer der genannten ersten, zweiten, dritten und vierten Strukturwände (4, 5, 6, 7) mit einer äußeren Oberfläche des rohrförmigen Körpers (1) und/oder mit einer seitlichen Oberfläche von wenigstens einer anderen der ersten, zweiten, dritten und vierten Strukturwände (4, 5, 6, 7) verbindet.

9. Hybridstrukturprofil nach Anspruch 8, **dadurch gekennzeichnet, dass** die genannten Verstärkungsrippen (9) zusätzlich mit wenigstens einem der genannten Flanschen (8) verbunden sind.

10. Hybridstrukturprofil nach Anspruch 8 oder 9, **dadurch gekennzeichnet, dass** die genannten Verstärkungsrippen (9) in mehreren Richtungen und gekreuzt angeordnet sind, wobei eine Netzstruktur entlang des Hybridstrukturprofils gebildet wird.

11. Hybridstrukturprofil nach einem der vorhergehenden Ansprüche, **dadurch gekennzeichnet, dass** die Grundstruktur wenigstens zwei der genannten rohrförmigen Körper (1) umfasst, welche zueinander parallel und getrennt angeordnet sind, und dass wenigstens eine der genannten Strukturwände, welche von der überspritzten Kunststoffstruktur definiert werden, eine Strukturverbindungswand (10) ist, welche sich von der äußeren Oberfläche eines der rohrförmigen Körper (1) aus zur äußeren Oberfläche des anderen erstreckt.

12. Hybridstrukturprofil nach Anspruch 11, **dadurch gekennzeichnet, dass** die genannten rohrförmigen Körper (1) durch wenigstens ein Verbindungsstück zusätzlich verbunden sind.

13. Hybridstrukturprofil nach einem der vorhergehenden Ansprüche, **dadurch gekennzeichnet, dass** die genannte überspritzte Kunststoffstruktur zusätzlich wenigstens ein Funktionselement definiert.

14. Hybridstrukturprofil nach Anspruch 1 oder 3, **dadurch gekennzeichnet, dass** die genannten Zapfen, welche die hervorstehenden Haltelemente (3) bilden, Oberflächenreliefs in Kontakt mit dem Kunststoffmaterial der überspritzten Kunststoffstruktur umfassen.

15. Hybridstrukturprofil nach einem der vorhergehenden Ansprüche, **dadurch gekennzeichnet, dass** das Material des rohrförmigen Körpers (1) aus einer Gruppe umfassend Metallmaterialien, welche Stahl, Aluminiumlegierungen und Titan, unter anderem, umfassen, und Verbundmaterialien, welche mit Glasfasern verstärkten Harzmatrizen und mit Kohlenstoff-Fasern verstärkten Harzmatrizen, unter anderem, umfassen, ausgewählt wird, und dass die hervorstehenden Haltelemente (3) aus einem Material sind, das in Bezug auf die Technik zur Verbindung mit dem Material des rohrförmigen Körpers (1) kompatibel ist und aus einer Gruppe umfassend Metallmaterialien, welche Stahl, Aluminiumlegierungen und Titan, unter anderem, und Kunststoffmaterialien umfassen, ausgewählt wird.

## Revendications

1. Profil structurel hybride applicable à une voiture, ce profil structurel hybride comportant une structure de base ayant des éléments de fixation saillants (3) et une structure en plastique surmoulée sur cette structure de base logeant ces éléments de fixation saillants (3), de sorte que
la structure de base comporte au moins un corps tubulaire (1) allongé dans le sens d'un axe longitudinal (E) et ayant un profil en coupe transversale fermée autour de cet axe longitudinal (E)
**caractérisé en ce que** cette structure en plastique surmoulée définit, sur un premier côté du corps tubulaire (1) au moins une paroi structurelle (4) s'étendant d'une surface extérieure du corps tubulaire (1) vers l'extérieur et le long d'au moins une portion de celle-ci, cette paroi structurelle (4) ayant une taille offrant, avec le corps tubulaire (1), une région en coupe transversale ayant un moment d'inertie souhaité; et
ces éléments de fixation saillants (3) comportent des tiges fixées sur le corps tubulaire et pourvues d'une surface extérieure en contact avec le matériau plastique de la structure en plastique surmoulée.

2. Le profil structurel hybride conformément à la revendication 1, **caractérisé en ce que** ces tiges formant les éléments de fixation saillants (3) sont fixées sur le corps tubulaire (1) par soudage ou application d'adhésif ou en le vissant dans des trous correspondant formés dans le corps tubulaire (1).

3. Le profil structurel hybride conformément à la revendication 1 ou 2, **caractérisé en ce que** cette structure en plastique surmoulée définit, sur un deuxième côté du corps tubulaire (1) en face de ce premier côté, au moins une deuxième paroi structurelle (5) s'étendant de cette surface extérieure du corps tubulaire (1) et le long d'au moins une portion de celle-ci, ces première et deuxième parois structurelles (4,5) étant substantiellement coplanaires ou parallèles.

4. Le profil structurel hybride conformément à la revendication 1 ou 2, **caractérisé en ce que** cette structure en plastique surmoulée définit, sur un deuxième côté du corps tubulaire (1) adjacent à ce premier côté , au moins une deuxième paroi structurelle (5) s'étendant de cette surface extérieure du corps tubulaire (1) et le long d'au moins une portion de celle-ci, ces première et deuxième parois (4,5) étant substantiellement perpendiculaires.

5. Le profil structurel hybride conformément à la revendication 3, **caractérisé en ce que** la structure en plastique surmoulée définit, sur un troisième côté du corps tubulaire (1) situé entre les premier et deuxième côtés, une troisième paroi structurelle (6) s'étendant de la surface extérieure du corps tubulaire (1) et le long d'au moins une portion de celui-ci, cette troisième paroi structurelle (6) étant substantiellement perpendiculaire aux première et deuxième parois structurelles (4,5).

6. Le profil structurel hybride conformément à la revendication 5, **caractérisé en ce que** la structure en plastique surmoulée définit, sur un quatrième côté du corps tubulaire (1) en face de ce troisième côté, une quatrième paroi structurelle (7) s'étendant de la surface extérieure du corps tubulaire (1) et le long d'au moins une portion de celui-ci, ces troisième et quatrième parois structurelles (7) étant substantiellement coplanaires ou parallèles.

7. Le profil structurel hybride conformément à une des revendications 1 à 6, **caractérisé en ce que** la structure en plastique surmoulée définit au moins une bride (8) s'étendant depuis au moins une de ces première, deuxième, troisième et quatrième parois structurelles (4,5,6,7), cette bride (8) étant perpendiculaire ou oblique par rapport à la première, deuxième, troisième et quatrième paroi structurelle respectives (4,5,56,7) d'où elle s'étend.

8. Le profil structurel hybride conformément à une des revendications 1 à 7, **caractérisé en ce que** cette structure en plastique surmoulée définit des nervures de renfort (9) reliant une surface latérale d'au moins une de ces première, deuxième, troisième et quatrième parois structurelles (4,5,6,7) à une surface extérieure du corps tubulaire (1) et/ou à une surface latérale d'au moins une autre des première, deuxième, troisième et quatrième parois structurelles (4,5.6,7).

9. Le profil structurel hybride conformément à la revendication 8, **caractérisé en ce que** ces nervures de renfort (9) sont en plus reliées à au moins une de ces brides (8).

10. Le profil structurel hybride conformément à la revendication 8 ou 9, **caractérisé en ce que** ces nervures de renfort (9) sont agencées en plusieurs sens et entrecroisées en formant une structure réticulée le long du profil structurel hybride.

11. Le profil structurel hybride conformément à une quelconque des revendications précédentes, **caractérisé en ce que** la structure de base comporte au moins deux de ces corps tubulaires (1) agencés parallèles l'un de l'autre et écartés et **en ce qu'**au moins une de ces parois structurelles définies par la structure en plastique surmoulée et une paroi de liaison structurelle (10) s'étendant de la surface extérieure d'un des corps tubulaires (1) à la surface extérieure de l'autre.

12. Le profil structurel hybride conformément à la revendication 11, **caractérisé en ce que** ces corps tubulaires (1) sont en plus reliés par au moins une pièce de liaison.

13. Le profil structurel hybride conformément une quelconque des revendications précédentes, **caractérisé en ce que** cette structure en plastique surmoulée définit en plus au moins un élément fonctionnel.

14. Le profil structurel hybride conformément à la revendication 1 ou 3, **caractérisé en ce que** ces tiges formant les éléments de fixation saillants (3) comportent des reliefs de la surface en contact avec le matériau en plastique de la structure en plastique surmoulée.

15. Le profil structurel hybride conformément à une quelconque des revendications précédentes, **caractérisé en ce que** le matériau du corps tubulaire (1) est sélectionné d'un groupe comprenant des matériaux métalliques, tels que l'acier, les alliages d'aluminium et le titane, entre autres et des matériaux composites, tels que la fibre de verre, des matrices de résine renforcées et des matrices de résine renforcées par des fibres de carbone, entre autres, et **en ce que** les éléments de fixation saillants (3) sont en un matériau compatible par rapport à la technique de fixation avec le matériau du corps tubulaire (1) sélectionné d'un groupe comprenant des matériaux métalliques, tels que l'acier, les alliages d'aluminium et le titane, entre autres, et des matériaux en plastique
